# EUROPÄISCHE PATENTANMELDUNG

(11) **EP 0 806 321 A2**
(43) Veröffentlichungstag der Anmeldung: **12.11.1997**
(21) Anmeldenummer: 97102180.3
(22) Anmeldetag: 12.02.1997
(51) Int. Cl.: B60R 9/04

(54) **Dachreling für Fahreuge**

(30) Priorität: 09.05.1996 DE 19618641
(71) Anmelder: Happich Fahrzeug-Dachsysteme GmbH, D-42285 Wuppertal (DE)
(72) Erfinder: Lumpe, Karl-Hein, 45549 Sprockhövel (DE); Rothstein, Reinhold, Dr., 42279 Wuppertal (DE); Grätz, Ronald, 45276 Essen (DE)

(57) **Zusammenfassung**

Beschrieben wird eine Dachreling für Fahrzeuge mit einem Galeriestab (1), den Galeriestab (1) an den Endbereichen aufnehmenden, eine von der Dachfläche eines Fahrzeugdachs (6) beabstandete Anordnung des Galeriestabs (1) ermöglichenden Stützelementen (2) und Befestigungsmitteln zur Festlegung der Stützelemente (2) auf einem Fahrzeugdach (6), wobei vorgesehen ist, daß der Galeriestab (1) eine längsdurchlaufende, nach oben offene Nut (7) aufweist, die Nut (7) C-förmig gestaltet ist, jedes Stützelement (2) als Adapter (10) relativ niedriger Bauart ausgebildet ist, der Adapter (10) einen ersten axialen Teilbereich (13) zum Abstützen eines Galeriestabs und einen zweiten axialen Teilbereich (14) zur Befestigungsaufnahme einer Abdeckkappe (3) aufweist und der Adapter (10) eine ihn durchsetzende Bohrung (15) für ein Befestigungsmittel besitzt.

## Beschreibung

Die Erfindung bezieht sich auf eine Dachreling für Fahrzeuge mit einem Galeriestab, den Galeriestab an den Endbereichen aufnehmenden, eine von der Dachfläche eines Fahrzeugdachs beabstandete Anordnung des Galeriestabs ermöglichenden Stützelementen und Befestigungsmitteln zur Festlegung der Stützelemente auf einem Fahrzeugdach.

Für den Transport von Lasten ist es bekannt, auf dem Dach eines Fahrzeugs Dachträgersysteme der unterschiedlichsten Art anzuordnen. Im wesentlichen durchgesetzt haben sich dabei Dachrelings mit von der Dachfläche beabstandeten Galeriestäben und Dachleisten, die unmittelbar auf dem Fahrzeugdach aufliegen. Für beide Systemarten gibt es Fürsprecher und Abnehmer, was es für die Fahrzeughersteller erforderlich macht, ihre Fahrzeuge je nach Kundenwunsch mit Dachrelings oder mit Dachleisten auszurüsten. Dies bedingt natürlich eine erhöhte Lagerhaltung und verursacht erhöhte, letztendlich von den Endabnehmern zu tragende Kosten.

Der Erfindung liegt hiernach die Aufgabe zugrunde, eine Dachreling der eingangs genannten Art zur Verfügung zu stellen, die in optischer und insbesondere technischer Hinsicht der Gestaltung und Ausbildung einer Dachreling im wesentlichen ebenso entspricht wie der Gestaltung und Ausbildung einer Dachleisie, um auf diese Weise eine Systemart einsparen und dennoch den Kundenwünschen gerecht werden zu können.

Zur Lösung dieser Aufgabe ist erfindungsgemäß vorgesehen, daß der Galeriestab eine längsdurchlaufende, nach oben offene Nut aufweist, daß die Nut C-förmig gestaltet ist, daß jedes Stützelement als Adapter relativ niedriger Bauart ausgebildet ist, daß der Adapter einen ersten axialen Teilbereich zum Abstützen eines Galeriestabendes und einen zweiten axialen Teilbereich zur Befestigungsaufnahme einer Abdeckkappe aufweist und daß der Adapter eine ihn durchsetzende Bohrung für ein Befestigungsmittel besitzt.

Die Merkmale der erfindungsgemäßen Dachreling sind dazu geeignet sich gegenseitig zu fördern und zu ergänzen. Dadurch, daß der Galeriestab eine längsdurchlaufende, nach oben offene Nut aufweist, bleibt der Galeriestab zwar ein solcher, jedoch gegenüber den bekannten Vorbildern mit dem wesentlichen Unterschied, daß er gleichzeitig in Funktion und im Aussehen einer Dachleiste entspricht. In funktioneller Hinsicht dient die C-förmige Nut zur Aufnahme von Querstäben bzw. deren Zubehör. Jedes als Adapter ausgebildete Stützelement ist dazu bestimmt, die bei Dachrelings sonst üblichen, aufwendigen Stützfüße zu ersetzen und zusätzlich dazu als Träger für eine Endkappe zu dienen. Mit der Angabe der relativ niedrigen Bauart soll zum Ausdruck gebracht werden, daß die Höhe der Adapter lediglich so groß sein muß, daß sich der Galeriestab unter Berücksichtigung einer etwaigen Dachwölbung gerade noch mit geringem Abstand über das Fahrzeugdach erstrecken kann. Durch den Abstand des Galeriestabs zum Fahrzeugdach soll also der Charakter einer Dachreling nicht verloren gehen. Die Aufteilung des Adapters in einen ersten und in einen zweiten axialen Teilbereich ist vorgesehen, um zum einen eine sinnvolle Abstützung und Halterung des Galeriestabs und zum anderen eine sinnvolle Befestigungsaufnahme für die Abdeckkappe zu erhalten. Dabei versteht es sich, daß Stabilitätsanfordrungen am Adapter nur im Abstützbereich des Galeriestabs erfüllt werden müssen, so daß der übrige Bereich einfach und materialsparend gestaltet sein kann.

Vorteilhafte Ausgestaltungen und zweckmäßige Weiterbildungen der Erfindung sind in den Unteransprüchen angegeben.

Ausführungsbeispiele der Erfindung werden nachfolgend anhand der Zeichnungen näher erläutert und es zeigen:
- Fig. 1: einen Endbereich der Dachreling teilweise im vertikalen Längsschnitt,
- Fig. 2: einen Schnitt etwa folgend der Linie II - II in Fig. 1,
- Fig. 3: einen Schnitt etwa folgend der Linie III - III in Fig. 1,
- Fig. 4: einen Schnitt etwa folgend der Linie IV - IV in Fig. 1,
- Fig. 5: einen Endbereich der Dachreling in einer zweiten Ausführungsform in einer etwa Fig. 1 entsprechenden Darstellungsmanier und
- Fig. 6: einen Schnitt etwa folgend der Linie VI - VI nach Fig. 5.

Die neue Dachreling besteht aus einem Galeriestab 1, je einem Stützelement 2 an jedem Galeriestabende, einer an jedem Galeriestabende bzw. an jedem Stützelement 2 angeschlossenen End- oder Abdeckkappe 3 und Befestigungselemten, bestehend aus mit Schraubenkopf 5 versehenen Schrauben 4. Die neue Dachreling wird mittels der Schrauben 4 auf dem strichpunktiert angedeuteten Fahrzeugdach 6 befestigt.

Die Zeichnungen zeigen jeweils nur einen Endbereich der Dachreling, jedoch versteht es sich, daß der nichtgezeigte Endbereich eine dem gezeigten entsprechende Ausbildung besitzt.

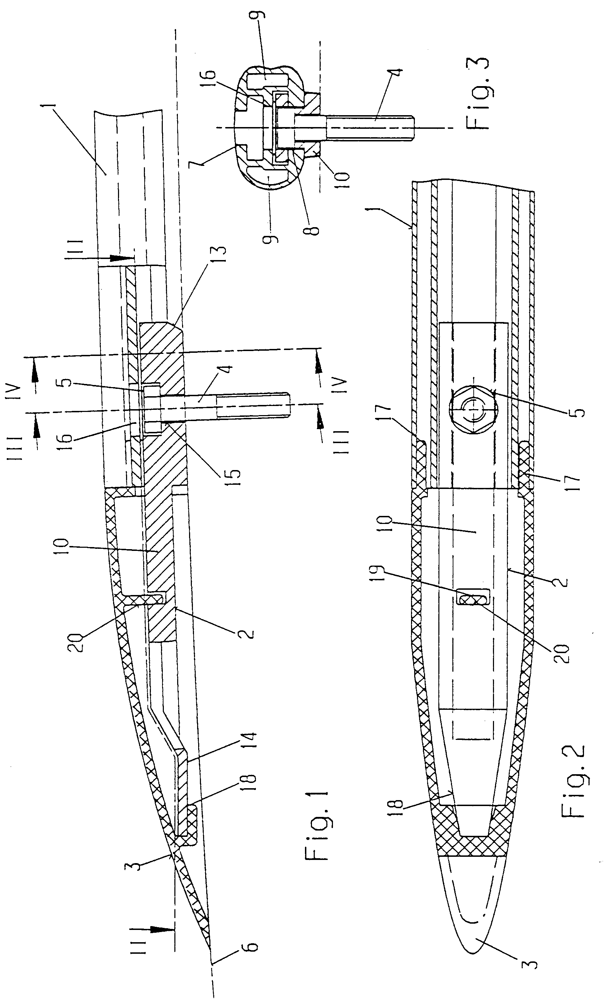

Der Galeriestab 1 nach Fig. 1 bis 4 ist als Strangpreßprofil ausgebildet und besteht z. B. aus Aluminium oder einer Aluminiumlegierung. Eine erste Besonderheit des Galeriestabs 1 besteht darin, daß dieser mit einer längsdurchlaufenden, nach oben offenen, C-förmig gestalteten Nut 7 ausgebildet ist. Die Nut 7 dient zur Anordnung und Befestigung von Querstäben (nicht gezeigt) oder deren Zubehör. Eine zweite Besonderheit des Galeriestabs 1 besteht darin, daß dieser auch eine zweite, längsdurchlaufende, nach unten offene, C-förmig gestaltete Nut 8 aufweist. Die Nut 8 dient zur Anordnung für die darin einschiebbaren Stützelemente 2. Eine dritte Besonderheit des Galeriestabs nach Fig. 1 bis 4 ist in der Ausbildung von längsdurchlaufenden Hohlkammern 9 zu sehen, die mit den Abdeckkappen 3 zusammenwirken. Durch die Hohlkammern 9 wird Material und Gewicht eingespart. Jeder Galeriestab 1 besteht aus dem abgelängt Abschnitt eines kontinuierlich gefertigten Strangpreßprofils. Jeder Galeriestab 1 kann für jedes beliebige Fahrzeug gleich sein. Unterschiede bestehen allenfalls in der jeweils gewünschten Galeriestablänge.

Das Stützelement 2 nach Fig. 1 bis 4 ist als Adapter 10 ausgebildet, der mittels der Schraube 4 an einem Fahrzeugdach 6 z. B. dadurch befestigt werden kann, daß unter der Dachhaut eine Schweißmutter (nicht gezeigt) an einem tragenden Karosserieteil angeordnet ist. Der Adapter 10 ist ein Schmiedeteil, ein Zinkdruckgußteil oder ggf. ein glasfaserverstärktes Kunststoff-Spritzgußteil. Da der Adapter 10 im Einbauzustand nicht sichtbar ist, sind an dessen Oberflächenbeschaffenheit keine besonderen Anforderungen zu stellen, so daß der Adapter 10 als billiger Massenartikel hergestellt werden kann. Der Adapter 10 weist an seinen Längsrändern durchlaufende Nuten 11 auf, die einen Adapterkopf 12 bilden und es ermöglichen, den Adapter 10 in einen, Endbereich des Galeriestabs 1 einzuschieben, und zwar in die untere Nut 8 und mit einem ersten axialen Teilbereich 13. Ein zweiter axialer Teilbereich 14 des Adapters 10 dient zur Befestigungsaufnahme einer Abdecklappe 3. Der erste axiale Teilbereich 13 des Adapters 10 wird von einer zum Durchführen einer Schraube 4 dienenden Stufenbohrung 15 durchsetzt. Auch der Galeriestab 1 weist an seinen Endbereichen Durchgangsbohrungen 16 für die Schrauben 4 auf.

Jede Abdeckkappe 3 kann als Spritzteil, Gußteil oder Blechteil gefertigt sein. Jede Abdeckkappe 3 ist mit einendig überstehend angeordneten Zungen 17 ausgebildet, die im Einbauzustand in den Hohlkammern 9 des Galeriestabs 1 eine Steckaufnahme finden. Am anderen den Zungen 17 abgewandten Ende weist jede Abdeckkappe 3 eine innenliegende taschenförmige Aufnahme 18 auf, zum Eingriff des freien Adapterendes, das entsprechend verjüngt ist (Fig. 2). Schließlich weist jede Abdeckkappe 3 im mittigen Bereich einen nach unten gerichteten, in eine Öffnung 19 im Adapter 10 eingreifenden Steg 20 auf. Durch diese Ausbildung ist eine zuverlässige Festlegung der Abdeckkappen 3 gewährleistet. Die Abdeckkappen 3 werden zweckmäßigerweise auf die Adapter 10 geklipst, wonach die Adapter 10 in die Galeriestabenden eingeschoben werden. Die Endmontage erfolgt durch eine Schraubbetätigung der Schrauben 4 von oben her in die erwähnten Schweißmuttern. Es ist denkbar, die Schraubenköpfe 5 mit einer Länge auszubilden, die ausreicht, um in die Durchgangsbohrungen 16 zu ragen, um auf diese Weise eine Verschiebesicherung für den Galeriestab 1 zu bewirken. Natürlich läßt sich eine Verschiebesicherung auch durch Anschläge an den Adaptern 10 realisieren.

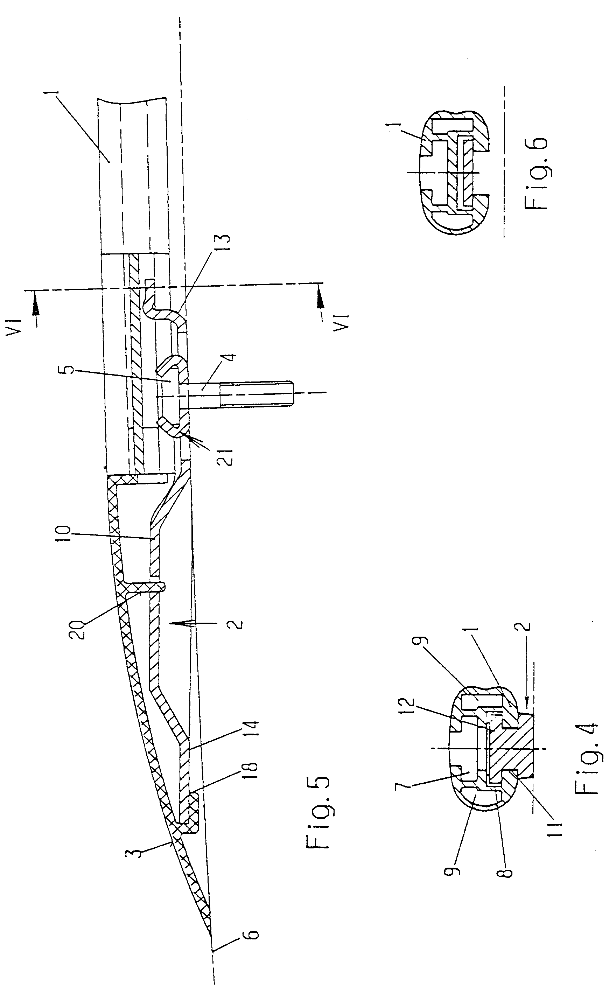

Die Ausführungsform gemäß Fig. 5 und 6 unterscheidet sich von der zuvor beschriebenen zunächst dadurch, daß der Galeriestab 1 als gerolltes Profil ausgebildet ist, das u. U. in der Herstellung billiger als ein Strangpreßprofil ist. Bei diesem Galeriestab 1 ist es für die Montage des Adapters 10 erforderlich, an den Endbereichen unterseitige Schlitzöffnungen auszubilden, z. B. durch Fräsen oder Stanzen, natürlich nur unter der Voraussetzung, daß eine Steckverbindung, wie anhand von Fig. 1 bis 4 beschrieben gewünscht wird.

Ein weiterer Unterschied bei der Ausführungsform nach Fig. 5 und 6 besteht darin, daß der Adapter 10 hier als geformtes Blechstanzteil ausgebildet ist, was aus Kostengründen sinnvoll sein kann. Der Adapter 10 haltert eine Schraube 4, in dem der Schraubenkopf 5 in einem ihn verschiebe- und verdrehfest aufnehmenden Käfig 21 sitzt. Dieser ist aus freigeschnittenen und hochgestellten Blechlappen 22 des Blechstanzteils gebildet. Bei dieser Schraubenanordnung und Halterung ist eine Befestigung der Dachreling von unten vorgesehen, wobei auf dem Gewindeschaft der Schraube 4 vom Fahrzeuginnern her eine nichtgezeigte Gewindemutter aufgeschraubt wird.

### Bezugszeichenliste

- 1.: Galeriestab
- 2.: Stützelement
- 3.: Abdecklappe
- 4.: Schrauben
- 5.: Schraubenkopf
- 6.: Fahrzeugdach
- 7.: Nut
- 8.: Nut
- 9.: Hohlkammer
- 10.: Adapter
- 11.: Nut
- 12.: Adapterkopf
- 13.: erster axialer Teilbereich
- 14.: zweiter axialer Teilbereich
- 15.: Stufenbohrung
- 16.: Durchgangsbohrung
- 17.: Zungen
- 18.: Taschenförmige Aufnahme
- 19.: Öffnung
- 20.: Steg
- 21.: Käfig
- 22.: Blechlappen

## Patentansprüche

1. Dachreling für Fahrzeuge mit einem Galeriestab (1),
den Galeriestab (1) an den Endbereichen aufnehmenden, eine von der Dachfläche eines Fahrzeugdachs (6) beabstandete Anordnung des Galeriestabs (1) ermöglichenden Stützelementen (2) und
Befestigungsmitteln zur Festlegung der Stützelemente (2) auf einem Fahrzeugdach (6), dadurch gekennzeichnet, daß
- der Galeriestab (1) eine langsdurchlaufende, nach oben offene Nut (7) aufweist,
- die Nut (7) C-förmig gestaltet ist,
- jedes Stützelement (2) als Adapter (10) relativ niedriger Bauart ausgebildet ist,
- der Adapter (10) einen ersten axialen Teilbereich (13) zum Abstützen eines Galeriestabs und einen zweiten axialen Teilbereich (14) zur Befestigungsaufnahme einer Abdeckkappe (3) aufweist und
- der Adapter (10) eine ihn durchsetzende Bohrung (15) für ein Befestigungsmittel besitzt.

2. Dachreling nach Anspruch 1, dadurch gekennzeichnet, daß der Galeriestab (1) aus dem Abschnitt eines Strangpreßprofils gebildet ist.

3. Dachreling nach Anspruch 1 oder 2, dadurch gekennzeichnet, daß der Galeriestab (1) sowohl mit einer längsdurchlaufenden, nach oben offenen, C-förmig gestalteten Nut (7) als auch mit einer längsdurchlaufenden, nach unten offenen, C-förmig gestalteten Nut (8) ausgebildet ist.

4. Dachreling nach wenigstens einem der Ansprüche 1 bis 3, dadurch gekennzeichnet, daß der Adapter (10) mit seitlichen, sich zumindest über seinen ersten axialen Teilbereich (13) erstreckende Nuten (11) und mit einem durch die Nuten (11) gebildeten Adapterkopf (12) ausgebildet und mit dem Adapterkopf (12) innerhalb der nach unten offenen C-förmigen Nut (8) des Galeriestabs (1) angeordnet ist.

5. Dachreling nach wenigstens einem der Ansprüche 1 bis 4, dadurch gekennzeichnet, daß der Adapter (10) als Zinkdruckguß- oder ggf. als Kunststoff-Spritzgußteil ausgebildet ist.

6. Dachreling nach Anspruch 1, dadurch gekennzeichnet, daß der Galeriestab (1) aus dem Abschnitt eines aus Bandmaterial gerollten Profils gebildet ist.

7. Dachreling nach Anspruch 6, dadurch gekennzeichnet, daß der Galeriestab (1) an seinen Endbereichen zwecks Bildung von Steckaufnahmen für die Adapter (10) unterseitig mit Schlitzöffnungen ausgebildet ist.

8. Dachreling nach wenigstens einem der vorangegangenen Ansprüche, dadurch gekennzeichnet, daß der Adapter (10) aus einem Blechstanzteil gebildet ist.

9. Dachreling nach Anspruch 8, dadurch gekennzeichnet, daß der aus einem Blechstanzteil gebildete Adapter (10) einen, einen Schraubkopf (5) verschiebe- und verdrehfest aufnehmenden Käfig (21) aufweist, der aus freigeschnittenen und hochgestellten Blechlappen (22) des Blechstanzteils besteht.

10. Dachreling nach wenigstens einem der Ansprüche 1 bis 9, dadurch gekennzeichnet, daß der Galeriestab (1) mit längsdurchlaufenden Hohlkammern (9) ausgebildet ist, in die an den Abdeckkappen (3) einendig überstehend angeordnete Zungen (17) eingreifen, wobei jede Abdeckkappe (3) zusätzlich am den Zungen (17) abgewandten Endbereich eine innen liegende taschenförmige Aufnahme (18) zum Eingriff des freien Adapterendes und zwischen den Zungen (17) und der taschenförmigen Aufnahme (18) einen nach unten gerichteten, in eine Öffnung (19) im Adapter (10) eingreifenden Steg (20) aufweist.
